# EUROPÄISCHE PATENTSCHRIFT

(11) **EP 3 410 412 B1**
(45) Veröffentlichungstag und Bekanntmachung des Hinweises auf die Patenterteilung: **01.04.2020**
(21) Anmeldenummer: 18171742.2
(22) Anmeldetag: 11.05.2018
(51) Int. Cl.: G08B 13/14, G08B 21/02

(54) **MOBILE ALARMVORRICHTUNG**
MOBILE ALARM DEVICE
DISPOSITIF D'ALARME MOBILE

(30) Priorität: 30.05.2017 DE 102017111833
(43) Veröffentlichungstag der Anmeldung: 05.12.2018
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 2 469 491
- DE-A1- 4 313 850
- DE-A1-102011 012 163
- US-A- 5 172 093
- US-A1- 2013 257 616

## Beschreibung

Die vorliegende Erfindung betrifft eine mobile Alarmvorrichtung zur lösbaren Befestigung an einem beweglichen Objekt, insbesondere an einem Zweirad oder einem Werkzeug.

Aus EP 2 469 491 A1 ist ein für Zweiräder geeignetes Anti-Diebstahl-System bekannt, mittels dessen ein zu sicherndes Objekt sowohl mechanisch als auch über Funk mit einem anderen Objekt verbunden werden kann, wobei diese beiden Verbindungen dann auf ihre Integrität überwacht werden. Wird festgestellt, dass die mechanische Verbindung unterbrochen ist, wird nicht gleich ein Alarm ausgelöst, sondern zunächst ein als Voralarm bezeichneter Zustand eingenommen, in welchem dann geprüft wird, ob auch noch die Funkverbindung unterbrochen wird. Erst wenn auch dies der Fall ist, wird ein Alarm ausgelöst und ein hörbares Alarmsignal ausgegeben. In US 5,172,093 A wird ein Alarmsystem beschrieben, das einen Grundmodus ("normal alarm mode") und einen Alarmmodus ("special alarm mode") umfasst, wobei aus dem Alarmmodus nach Ablauf eines bestimmten Zeitraums (5 Sekunden) seit Beginn des Alarmmodus zurück in den Grundmodus gewechselt wird.

Zur Sicherung eines beweglichen Objekts insbesondere gegen Diebstahl kann dieses beispielsweise an ein anderes, unbewegliches Objekt angeschlossen werden. So werden etwa Zweiräder zur Sicherung gegen Diebstahl zweckmäßigerweise beispielsweise mittels eines Zweiradschlosses an ein unbewegliches Objekt, wie etwa einen Zweiradständer oder einen Laternenmasten, angeschlossen, sofern das Zweiradschloss dazu ausgebildet und ein geeignetes unbewegliches Objekt vorhanden ist. Andernfalls verbleibt noch die Möglichkeit das bewegliche Objekt derart in sich abzuschließen, dass ein unbefugtes Fortbewegen des Objektes zumindest erschwert wird und/oder dass das Objekt im abgeschlossenen Zustand nicht nutzbar ist. Beispielsweise kann ein Rad eines zu sichernden Zweirades durch ein Zweiradschloss blockiert werden, so dass das Zweirad weder zum Fahren genutzt noch auf einfache Weise weggeschoben werden kann. Manche Zweiradschlösser können, insbesondere wenn sie im geschlossenen Zustand eine hinreichend große Schlaufe bilden, sowohl zum Anschließen als auch zum beschriebenen Abschließen verwendet werden, während beispielsweise Rahmenschlösser bzw. Speichenschlösser speziell für ein Abschließen im Sinne eines inneren Blockierens ausgebildet sind.

Die Sicherheit eines jeweiligen Sicherungsmittels, durch das ein bewegliches Objekt dagegen gesichert werden soll, fortbewegt zu werden, hängt davon ab, wie leicht und somit wie schnell das Sicherungsmittel überwunden werden kann. Grundsätzlich kann jedes Sicherungsmittel spätestens durch dessen Zerstörung überwunden werden, wenn jemand hierzu hinreichend lang ungestörten Zugriff auf das Sicherungsmittel hat. Daher trägt es zur Sicherheit eines mittels eines Sicherungsmittels geschützten beweglichen Objekts bei, wenn Vorkehrungen dazu getroffen werden, dass Aufbruchsversuche nicht unbemerkt bleiben, sondern insbesondere durch Aussenden eines Alarms signalisiert werden.

Dazu kann etwa ein Zweiradschloss zusätzlich zu der Funktion, ein Fortbewegen des Zweirades zu verhindern, eine Alarmfunktion aufweisen, so dass es insofern eine mobile Alarmvorrichtung darstellt. Es kann aber auch eine gesonderte mobile Alarmvorrichtung vorgesehen werden, die grundsätzlich unabhängig von mechanischen Sicherungsmitteln zum An- oder Abschließen des beweglichen Objekts lösbar an dem beweglichen Objekt befestigt werden kann. Da bereits durch das bloße Aussenden eines Alarmsignals auf einen versuchten Diebstahl aufmerksam gemacht und der Dieb gestört werden kann, kann das Anbringen einer solchen mobilen Alarmvorrichtung ausreichen, um ein unbefugtes Fortbewegen des beweglichen Objekts mit einer gewissen Zuverlässigkeit zu verhindern. Vorteilhafterweise wird die mobile Alarmvorrichtung aber, sofern sie nicht ohnehin in mechanischen Sicherungsmitteln, wie etwa einem Zweiradschloss, integriert ist, zusätzlich zu solchen Sicherungsmitteln verwendet.

Grundsätzlich kann eine mobile Alarmvorrichtung zur Sicherung verschiedenster Objekte genutzt werden und ist insbesondere dann zweckmäßig, wenn es sich bei dem zu sichernden Objekt um einen Wertgegenstand handelt, der typischerweise zumindest zeitweise leicht zugänglich und transportabel ist. Beispielsweise können Werkzeuge oder Maschinen, die auf Baustellen zum Einsatz kommen und nicht regelmäßig weggeschlossen werden, über Nacht zu sichern sein. Eine mobile Alarmvorrichtung kann auch genutzt werden, um etwa einen Werkzeugkasten oder ein sonstiges Behältnis zu sichern, in dem die eigentlich zu sichernden Objekte aufgenommen sind, z.B. einen Schuppen oder einen Spind.

Um auf einen unbefugten Zugriff auf das gesicherte Objekt reagieren zu können, muss die mobile Alarmvorrichtung dazu ausgebildet sein zu erkennen, ob versucht wird, das bewegliche Objekt fortzubewegen, insbesondere ob versucht wird, vorhandene Sicherungsmittel aufzubrechen. Das allgemeinste Kriterium für das Vorliegen eines solchen Versuchs besteht darin, dass mechanische Einwirkungen auf die Alarmvorrichtung erfolgen. Grundsätzlich kann jede Einwirkung, durch die sich die Lage der Alarmvorrichtung verändert, ein Hinweis auf einen Aufbruchsversuch sein. Während sich solche mechanischen Einwirkungen vergleichsweise einfach erkennen lassen, trifft dies für die jeweilige Ursache der mechanischen Einwirkungen dagegen nicht zu. Das führt dazu, dass auch mechanische Einwirkungen zu einem Alarm führen, die eine andere Ursache als einen Aufbruchsversuch haben. Beispielsweise kann schon eine von gegebenenfalls starkem Wind verursachte Bewegung der Alarmvorrichtung nicht von einem Aufbruchsversuch unterscheidbar sein. Zudem kann etwa auch das zu sichernde bewegliche Objekt eine Erschütterung erfahren, ohne dass ein Aufbruchsversuch vorliegen muss, etwa wenn jemand versehentlich an ein angeschlossenes Zweirad stößt oder es geringfügig versetzt, z.B. um daneben ein weiteres Zweirad anzuschließen.

Dass tatsächliche Aufbruchsversuche von zufälligen oder harmlosen Einwirkungen schlecht zu unterscheiden sind, führt zu einer hohen Wahrscheinlichkeit von Fehlalarmen. Da das zur Signalisierung eines Aufbruchsversuchs und Störung des Diebes ausgesandte Alarmsignal zweckmäßigerweise sehr laut ist und somit auch je nach Nähe zur Alarmvorrichtung unangenehm sein kann, sind solche Fehlalarme möglichst zu vermeiden. Wenn Fehlalarme zu häufig auftreten, kann dies zur Folge haben, dass die Alarmvorrichtung gar nicht mehr verwendet wird, wodurch sich die eigentlich zu erreichende Sicherung des beweglichen Objekts verschlechtert.

Es ist eine Aufgabe der Erfindung, eine mobile Alarmvorrichtung zur lösbaren Befestigung an einem beweglichen Objekt, insbesondere an einem Zweirad, bereitzustellen, die eine verringerte Anfälligkeit für das Aussenden lauter und störender Fehlalarme aufweist.

Die Aufgabe wird gelöst durch eine mobile Alarmvorrichtung mit den Merkmalen des Anspruchs 1. Vorteilhafte Weiterbildungen ergeben sich aus den abhängigen Ansprüchen, der nachfolgenden Beschreibung sowie den Figuren.

Die erfindungsgemäße mobile Alarmvorrichtung umfasst eine Erfassungsvorrichtung zum Erfassen von Lageänderungen der Alarmvorrichtung, eine Ausgabevorrichtung zum Ausgeben von Alarmsignalen sowie eine Steuervorrichtung zum Ansteuern der Ausgabevorrichtung in Abhängigkeit von erfassten Lageänderungen. Die Mobilität der Alarmvorrichtung und ihre lösbare Befestigung an einem jeweiligen beweglichen Objekt ermöglichen es, die Alarmvorrichtung im Alltag mitzuführen und flexibel zur Sicherung verschiedener beweglicher Objekte zu nutzen. Die Befestigung kann dabei auf ganz unterschiedliche Weise erfolgen. Zum Beispiel kann die Alarmvorrichtung dazu ausgebildet sein, nach Art eines Zweiradschlosses oder Hangschlosses an dem jeweiligen Objekt angeschlossen zu werden. Die Befestigung kann aber auch durch eine Schraub- oder Klebeverbindung, mittels einer Schelle, magnetisch und/oder etwa mittels Klettverschluss erfolgen. Grundsätzlich kann auch eine kraftschlüssige Anordnung, z.B. ein Klemmsitz, der Alarmvorrichtung an dem jeweiligen Objekt ausreichen, beispielsweise indem die Alarmvorrichtung in einem Sattelrohr eines Zweirades eingesetzt und festgeklemmt wird. Vorzugsweise wird die Alarmvorrichtung dabei jedenfalls derart an dem jeweiligen beweglichen Objekt befestigt, dass sie Lageänderungen des Objekts mitvollzieht.

Als Lageänderungen der Alarmvorrichtung können mittels der Erfassungsvorrichtung beispielsweise Bewegungen und/oder Beschleunigungen der Alarmvorrichtung in eine oder mehrere Linearrichtungen und/oder eine oder mehrere Drehrichtungen erfassbar sein. Beispielsweise kann es sich bei der Erfassungsvorrichtung um einen Beschleunigungssensor handeln, der Beschleunigungen bevorzugt in drei verschiedene Raumrichtungen dynamisch erfassen kann. Als Lageänderungen, von denen abhängig die Steuervorrichtung die Ausgabevorrichtung zum Ausgeben von Alarmsignalen ansteuern kann, können dann direkt eine oder mehrere der so erfassten Beschleunigungen herangezogen werden. Die erfassten Lageänderungen können davon aber auch abgeleitet sein, etwa wenn es sich bei den Lageänderungen um Ausrichtungsänderungen handelt, die durch einen oder mehrere auf jeweilige Drehachsen bezogene Drehwinkel definiert sind. Derartige Ausrichtungsänderungen können alternativ oder zusätzlich auch mittels eines oder mehrerer Gyroskope erfasst werden. Ferner kann die Erfassungsvorrichtung dazu ausgebildet sein, nach Art eines Neigungssensors die Richtung einer oder mehrerer statischer Beschleunigungen, wie z.B. der Schwerkraft, zu erfassen. Zudem kann dabei ergänzend oder auch alternativ eine Veränderung eines Azimutalwinkels berücksichtigt werden, etwa indem die Erfassungsvorrichtung eine Kompasseinrichtung umfasst.

Als Lageänderung der Alarmvorrichtung kann aber nicht nur eine Änderung der Ausrichtung der Alarmvorrichtung, sondern auch eine Änderung hinsichtlich der Position der Alarmvorrichtung im Raum mittels der Erfassungsvorrichtung erfassbar sein. Dazu kann die Erfassungsvorrichtung z.B. nach Art eines GPS-Empfängers dazu ausgebildet sein, die Position der Alarmvorrichtung anhand empfangener Signale zu ermitteln. Wenn zur Erfassung von Lageänderungen der Alarmvorrichtung eine Technik eingesetzt wird, mit der eine Position oder eine Ausrichtung der Alarmvorrichtung ermittelt werden kann, aber nicht die Strecke bzw. der Winkel der Lageänderung berücksichtigt werden sollen, sondern die die Geschwindigkeit und/oder die Beschleunigung einer Positions- oder Ausrichtungsänderung, so können diese Größen durch Differenzierung über die Zeit bestimmt werden.

Die Steuervorrichtung berücksichtigt die erfassten Lageänderungen der Alarmvorrichtung als Kriterium dafür, ob ein Alarm ausgelöst, d.h. die Ausgabevorrichtung zum Ausgeben eines Alarmsignals angesteuert, werden soll oder nicht. Dabei kann als Maß einer jeweiligen Lageänderung, das für diese Entscheidung beispielsweise mit einem Schwellenwert oder einem durch zwei Grenzwerte definierten Wertebereich verglichen wird, entweder eine Abweichung von einem Ausgangswert, also beispielsweise eine zurückgelegte Strecke oder ein durchlaufener Drehwinkel, oder auch der aktuelle, gegebenenfalls über ein Zeitfenster gemittelte, Grad der Veränderung, also etwa die Geschwindigkeit bzw. Winkelgeschwindigkeit oder die Beschleunigung bzw. Winkelbeschleunigung, herangezogen werden.

In Reaktion auf eine erfasste Lageänderung, die auf eine unzulässige Einwirkung auf die Alarmvorrichtung oder das bewegliche Objekt, an dem die Alarmvorrichtung befestigt ist, hindeutet, wird die Ausgabevorrichtung zum Ausgeben eines Alarmsignals angesteuert. Grundsätzlich kann es sich dabei um jede Art von Signal handeln, das geeignet ist, das Feststellen einer möglichen unzulässigen Einwirkung nach außen zu signalisieren. Vorzugsweise ist die Ausgabevorrichtung dazu ausgebildet, akustische Alarmsignale auszugeben.

Erfindungsgemäß ist die Steuervorrichtung in einem Überwachungsmodus und in einem Alarmierungsmodus betreibbar. Dabei ist die Steuervorrichtung dazu ausgebildet, im Überwachungsmodus, wenn eine erfasste Lageänderung in einem ersten Signifikanzbereich liegt, die Ausgabevorrichtung zum Ausgeben eines Voralarms anzusteuern sowie in den Alarmierungsmodus zu wechseln. Ferner ist die Steuervorrichtung dazu ausgebildet, im Alarmierungsmodus, wenn seit dem letzten Ausgeben eines Alarmsignals ein vorgegebener Zeitraum verstrichen ist, in den Überwachungsmodus zu wechseln und andernfalls, wenn eine erfasste Lageänderung in einem zweiten Signifikanzbereich liegt, die Ausgabevorrichtung zum Ausgeben eines von dem Voralarm verschiedenen Hauptalarms anzusteuern.

Mit anderen Worten werden sowohl im Überwachungsmodus als auch im Alarmierungsmodus jeweilige Lageänderungen der Alarmvorrichtung erfasst und im Hinblick darauf geprüft, ob sie auf eine unzulässige Einwirkung schließen lassen. Dazu wird jeweils festgestellt, ob die jeweilige Lageänderung in einem vorgegebenen Signifikanzbereich liegt oder nicht, wobei im Überwachungsmodus ein erster Signifikanzbereich und im Alarmierungsmodus ein zweiter Signifikanzbereich maßgeblich ist, die verschieden sein können. Außerdem unterscheidet sich das im Überwachungsmodus gegebenenfalls ausgegebene Alarmsignal von dem im Alarmierungsmodus gegebenenfalls ausgegebene Alarmsignal, bei dem es sich im einen Fall lediglich um einen Voralarm und im anderen Fall um einen Hauptalarm handelt.

Vorzugsweise weist der Hauptalarm eine größere Reichweite als der Voralarm auf und/oder signalisiert eine größere Dringlichkeit als der Voralarm. Der Hauptalarm kann sich vom Voralarm insbesondere insofern unterscheiden, als der Hauptalarm eine andere, insbesondere größere, Dauer, Lautstärke, Tonhöhe und/oder Modulationsfrequenz als der Voralarm aufweist. Der Voralarm kann beispielsweise eine Dauer von etwa 3 Sekunden aufweisen; der Hauptalarm kann beispielsweise eine Dauer von 20 Sekunden aufweisen. Zudem kann der Hauptalarm einen Schalldruckpegel von mindestens etwa 80 dB, bevorzugt mindestens etwa 90 dB, insbesondere mindestens etwa 100 dB, in einer Entfernung von etwa 0,3 m oder etwa 0,5 m von der Ausgabevorrichtung aufweisen. Der Voralarm kann denselben Schalldruckpegel wie der Hauptalarm aufweisen oder auch einen Schalldruckpegel, der beispielsweise um mindestens etwa 10 dB oder mindestens etwa 20 dB niedriger ist als der des Hauptalarms.

Des Weiteren kann vorgesehen sein, dass während des Aussendens des Voralarms und/oder des Hauptalarms keine weiteren Lageänderungen der Alarmvorrichtung erfasst oder erfasste Lageänderungen zumindest nicht ausgewertet werden, so dass die genannten Regeln für den Überwachungsmodus und den Alarmierungsmodus für die Dauer des Voralarms und/oder des Hauptalarms ausgesetzt sind. Ferner ist es in diesem Zusammenhang bevorzugt, wenn der genannte vorgegebene Zeitraum, nach dessen Verstreichen die Steuervorrichtung zurück in den Überwachungsmodus wechselt, auf den Zeitpunkt des Endes des letzten Ausgebens eines Alarmsignals bezogen ist.

Während der Hauptalarm grundsätzlich dem Alarmsignal herkömmlicher Alarmvorrichtungen im Wesentlichen entsprechen kann, ist der Voralarm demgegenüber abgeschwächt und fungiert somit weniger als regulärer Alarm denn als Warnung. Durch den Voralarm kann somit auf eine hinreichend signifikante Lageänderung der Alarmvorrichtung zunächst mit verminderter Intensität reagiert werden, bevor gegebenenfalls anschließend, z.B. wenn die Lageänderung zunimmt oder wenn die Lageänderung fortdauert, der Hauptalarm ausgelöst wird.

Dem Auslösen eines insbesondere lauten und unter Umständen unangenehmen Hauptalarms wird somit eine Vorstufe vorgelagert, durch die verhindert wird, dass jegliche nicht lediglich unterschwellige Lageänderung sofort einen Hauptalarm auslöst. Stattdessen wird als Voraussetzung für das Auslösen des Hauptalarms erst geprüft, ob eine erfasste Lageänderung in dem ersten Signifikanzbereich liegt, und anschließend, ob eine weitere Lageänderung in dem zweiten Signifikanzbereich liegt. Auf diese Weise wird der Hauptalarm verzögert und bei geeigneter Wahl der Signifikanzbereiche eine zweistufige und somit Fehlalarme besser ausschließende Prüfung der Signifikanz einer jeweiligen Lageänderung erreicht.

Damit aber die Verzögerung des Hauptalarms durch die zweistufige Prüfung einem Dieb keine zusätzliche Zeit verschafft, wird auch im Überwachungsmodus, wenn eine Lageänderung im ersten Signifikanzbereich festgestellt wird, ein Alarmsignal ausgegeben, auch wenn es sich dabei lediglich um einen Voralarm handelt. Ein solcher Voralarm stört im Falle eines Fehlalarms weniger, als es ein sofortiger Hauptalarm tun würde. Zugleich kann der Voralarm, wenn auch weniger zuverlässig als der Hauptalarm, im Falle eines versuchten Diebstahls bereits auf das bewegliche Objekt, an dem die Alarmvorrichtung befestigt ist, aufmerksam machen und den Diebstahl dadurch vereiteln. Zudem wird einem Dieb durch den Voralarm als eine Art Warnung signalisiert, dass er bei fortgesetzter Einwirkung auf das bewegliche Objekt oder die daran befestigte Alarmvorrichtung mit einem regulären Alarm zu rechnen hat, wodurch der Dieb abgeschreckt werden kann. Auf diese Weise kann ein Diebstahl unter Umständen auch vereitelt werden, ohne dass der Hauptalarm überhaupt ausgelöst werden muss, so dass nicht nur bei Fehlalarmen, sondern auch im tatsächlichen Alarmfall eine Störung der Öffentlichkeit durch den lauten Hauptalarm seltener erfolgt.

Die genannte Zweistufigkeit der Prüfung, ob ein Hauptalarm ausgelöst wird, ergibt sich insbesondere dadurch, dass die Steuervorrichtung erst in den Alarmierungsmodus wechselt, wenn zuvor im Überwachungsmodus eine Lageänderung erfasst wurde, die in den ersten Signifikanzbereich fällt, und wenn außerdem in dem dann anschließenden Alarmierungsmodus innerhalb eines gewissen vorgegebenen Zeitraums eine weitere Lageänderung erfasst wird, die in den zweiten Signifikanzbereich fällt. Sollte innerhalb dieses Zeitraums dagegen keine derartige Lageänderung erfasst werden, wechselt die Steuervorrichtung zurück in den Überwachungsmodus, ohne dass ein Hauptalarm ausgegeben wird. Da das zu sichernde bewegliche Objekt in der Regel stillsteht, solange es keine mechanischen Einwirkungen von außen erfährt, stellt der Überwachungsmodus sozusagen den Normalzustand der Steuervorrichtung dar. Insbesondere wird die Steuervorrichtung anfänglich, z.B. nach einem Einschalten oder Aktivieren der Alarmvorrichtung, zunächst im Überwachungsmodus betrieben. Im Alarmierungsmodus wird die Steuereinrichtung dagegen jeweils lediglich vorübergehend betrieben, nämlich erst nachdem eine Lageänderung erfasst wurde, die in dem ersten Signifikanzbereich liegt, und anschließend nur so lange, bis seit dem jeweils letzten Ausgeben eines Alarmsignals der genannte vorgegebene Zeitraum verstrichen ist.

Voraussetzung dafür, dass ein Voralarm oder ein Hauptalarm ausgegeben wird, ist jeweils, dass fortlaufend Lageänderungen erfasst werden und geprüft wird, ob eine jeweils erfasste Lageänderung in dem ersten oder zweiten Signifikanzbereich liegt. Gemäß einer vorteilhaften Ausführungsform liegt die erfasste Lageänderung genau dann in einem jeweiligen Signifikanzbereich, wenn ein der Lageänderung entsprechendes Maß größer oder nicht kleiner als ein Minimalwert des jeweiligen Signifikanzbereichs ist und gegebenenfalls kleiner oder nicht größer als ein Maximalwert des jeweiligen Signifikanzbereichs ist. Bei dem genannten Maß kann es sich insbesondere, wie vorstehend bereits erläutert, um ein Streckenmaß bzw. ein Winkelmaß, um eine Geschwindigkeit bzw. Winkelgeschwindigkeit oder um eine Beschleunigung bzw. Winkelbeschleunigung handeln. Eine jeweilige erfasste Lageänderung kann also insbesondere als ein Zahlenwert angegeben werden, der zur Feststellung, ob die Lageänderung in einem jeweiligen Signifikanzbereich liegt, mit Grenzwerten des Signifikanzbereichs verglichen werden kann.

Dabei weisen beide Signifikanzbereiche zumindest einen Minimalwert auf. Wenn ein jeweiliger Signifikanzbereich lediglich durch diesen Minimalwert begrenzt wird, ist er nach oben offen, d.h. der Signifikanzbereich umfasst alle Werte, die größer oder nicht kleiner als der Minimalwert sind. Beispielsweise können beide Signifikanzbereiche nach oben unbeschränkt sein und lediglich einen Minimalwert aufweisen, der sich unterscheiden oder auch für beide Signifikanzbereiche identisch sein kann. Insbesondere der erste Signifikanzbereich kann aber auch einen Maximalwert aufweisen, der den Signifikanzbereich nach oben begrenzt, so dass die Lageänderung genau dann in diesem Signifikanzbereich liegt, wenn das der Lageänderung entsprechende Maß größer oder nicht kleiner als der Minimalwert und zudem kleiner oder nicht größer als der Maximalwert ist. Der zweite Signifikanzbereich weist bevorzugt keinen Maximalwert auf, so dass im Alarmierungsmodus jede Lageänderung, die größer oder nicht kleiner als der Minimalwert des zweiten Signifikanzbereichs ist, zu einem Hauptalarm führt.

Der erste und der zweite Signifikanzbereich können in der Alarmvorrichtung fest vorgegeben sein. Insbesondere können dazu die Minimalwerte der beiden Signifikanzbereiche und gegebenenfalls auch der Maximalwert des ersten Signifikanzbereichs in einem von der Steuervorrichtung der Alarmvorrichtung auslesbaren Speicher gespeichert sein. Dabei können die Signifikanzbereiche auch einstellbar sein, etwa indem der Minimalwert und/oder der Maximalwert eines jeweiligen Signifikanzbereichs zumindest innerhalb eines gewissen Rahmens im Wesentlichen frei verändert oder aus mehreren vorgegebenen möglichen Werten ausgewählt werden können. Auf diese Weise kann ein Nutzer die Auslöseempfindlichkeit der Alarmvorrichtung nach Bedarf anpassen.

Grundsätzlich können der erste und der zweite Signifikanzbereich einander überlappen und sogar zumindest im Wesentlichen deckungsgleich, also etwa auch vollständig identisch, sein. Wenn der erste und der zweite Signifikanzbereich denselben Minimalwert aufweisen, unterscheidet sich die Auslöseempfindlichkeit der Alarmvorrichtung im Überwachungsmodus nicht von derjenigen im Alarmierungsmodus. Ob ein Voralarm oder aber ein Hauptalarm ausgelöst wird, wird dann nicht anhand der Stärke der jeweiligen erfassten Lageänderung unterschieden, sondern lediglich anhand dessen, ob zuvor innerhalb des genannten vorgegebenen Zeitraums bereits ein Voralarm ausgegeben wurde und sich die Steuervorrichtung daher im Alarmierungsmodus befindet.

Gemäß einer vorteilhaften Ausführungsform ist der Minimalwert des ersten Signifikanzbereichs kleiner als der Minimalwert des zweiten Signifikanzbereichs. Auf diese Weise können für das Ausgeben des Voralarms im Überwachungsmodus und das Ausgeben des Hauptalarms im Alarmierungsmodus unterschiedliche Auslöseempfindlichkeiten eingestellt sein. Zudem ermöglicht das Vorsehen derart verschiedener Signifikanzbereiche, bereits im Überwachungsmodus auf Lageänderungen unterschiedlichen Ausmaßes in unterschiedlicher Weise zu reagieren, wie nachfolgend noch erläutert wird.

Wenn der Minimalwert des zweiten Signifikanzbereichs größer als der Minimalwert des ersten Signifikanzbereichs ist, kann der zweite Signifikanzbereich eine Teilmenge des ersten Signifikanzbereichs sein, insbesondere wenn der erste Signifikanzbereich nach oben nicht begrenzt ist. Wenn der erste Signifikanzbereich dagegen einen Maximalwert aufweist, können der erste und der zweite Signifikanzbereich auch disjunkt sein. In diesem Fall ist es bevorzugt, wenn der Maximalwert des ersten Signifikanzbereichs dem Minimalwert des zweiten Signifikanzbereichs entspricht. Auf diese Weise grenzen der erste und der zweite Signifikanzbereich nahtlos aneinander an, so dass keine Lageänderungen erfasst werden können, die zwischen dem ersten Signifikanzbereich und dem zweiten Signifikanzbereich liegen. Zudem ist der zweite Signifikanzbereich vorzugsweise nach oben nicht begrenzt. Somit kann dann jede nicht unterschwellige Lageänderung, also jede Lageänderung, deren zugeordnetes Maß größer oder nicht kleiner als der Minimalwert des ersten Signifikanzbereichs ist, vorteilhafterweise einem der beiden Signifikanzbereiche eindeutig zugeordnet werden.

Wenn es sich bei dem für die Feststellung, ob eine Lageänderung in einem jeweiligen Signifikanzbereich liegt, herangezogenen Maß um ein Winkelmaß handelt, beträgt der Minimalwert des ersten Signifikanzbereichs vorzugsweise mindestens etwa 2° und höchstens etwa 10°, beispielsweise etwa 4°, und/oder der Minimalwert des zweiten Signifikanzbereichs mindestens etwa 12° und höchstens etwa 20°.

Gemäß einer weiteren vorteilhaften Ausführungsform beträgt der genannte vorgegebene Zeitraum, nach dessen Verstreichen die Steuervorrichtung aus dem Alarmierungsmodus in den Überwachungsmodus wechselt, etwa 3 Sekunden oder etwa 5 Sekunden. Dieser Zeitraum bildet eine Art Zeitfenster, innerhalb dessen nach einem Ausgeben eines Alarmsignals geprüft wird, ob eine weitere signifikante Lageänderung erfasst wird. Dabei kann dieser Zeitraum auch davon abhängig sein, was für ein Alarmsignal zuletzt ausgegeben wurde. Beispielsweise kann er etwa 3 Sekunden betragen, wenn es sich bei dem zuletzt ausgegebenen Alarmsignal um den Voralarm handelt, und etwa 5 Sekunden betragen, wenn es sich bei dem zuletzt ausgegebenen Alarmsignal um den Hauptalarm handelt. Der vorgegebene Zeitraum kann auch einstellbar sein, um die jeweilige Dauer des Alarmierungsmodus anpassen zu können.

Zwar stellt im Überwachungsmodus der erste Signifikanzbereich das Kriterium dafür dar, ob ein Voralarm ausgelöst wird oder nicht. Daraus folgt jedoch nicht, dass, wenn eine im Überwachungsmodus erfasste Lageänderung außerhalb des ersten Signifikanzbereichs liegt, zwangsläufig überhaupt keine Reaktion erfolgt. Insbesondere kann es zweckmäßig sein, wenn der erste Signifikanzbereich durch einen Maximalwert nach oben begrenzt ist, auf Lageänderungen oberhalb des ersten Signifikanzbereichs, etwa durch direktes Auslösen eines Hauptalarms und Wechsel in den Alarmierungsmodus, zu reagieren.

Konkret kann die Steuervorrichtung gemäß einer weiteren vorteilhaften Ausführungsform der Alarmvorrichtung dazu ausgebildet sein, im Überwachungsmodus, wenn eine erfasste Lageänderung nicht in dem ersten Signifikanzbereich liegt, aber in dem zweiten Signifikanzbereich liegt, die Ausgabevorrichtung zum Ausgeben des Hauptalarms anzusteuern sowie in den Alarmierungsmodus zu wechseln. Somit sind bei dieser Ausführungsform zwei Möglichkeiten vorgesehen, wie es zu dem Ausgeben eines Hauptalarms kommen kann. Zum einen wird ein Hauptalarm ausgegeben, wenn zuvor im Überwachungsmodus infolge einer dem ersten Signifikanzbereich entsprechenden Lageänderung ein Voralarm ausgegeben wurde und im anschließenden Alarmierungsmodus eine dem zweiten Signifikanzbereich entsprechende Lageänderung erfasst wird. Zum anderen kann ein Hauptalarm bei der vorliegenden Ausführungsform aber auch direkt aus dem Überwachungsmodus heraus ausgelöst werden, nämlich wenn schon im Überwachungsmodus eine so starke Lageänderung erfasst wird, dass sie den ersten Signifikanzbereich überschreitet, aber in dem zweiten Signifikanzbereich liegt, der vorzugsweise nach oben unbegrenzt ist.

Wenn im Überwachungsmodus eine Lageänderung innerhalb des ersten Signifikanzbereichs erfasst wird, wird der Voralarm ausgegeben und in den Alarmierungsmodus gewechselt, in dem dann auf eine erfasste Lageänderung innerhalb des zweiten Signifikanzbereichs mit dem Hauptalarm reagiert wird. Wenn im Alarmierungsmodus innerhalb des genannten vorgegebenen Zeitraums aber eine Lageänderung erfasst wird, die lediglich in dem ersten Signifikanzbereich, nicht aber in dem zweiten Signifikanzbereich liegt, kann zur Vermeidung möglicher Fehlalarme vorgesehen sein, dass wie bei einer unterschwelligen Lageänderung kein Alarmsignal ausgegeben wird. Dass aber im Alarmierungsbetrieb erneut eine dem ersten Signifikanzbereich zugeordnete Lageänderung erfasst wird, kann aber auch als Hinweis auf ein unbefugtes Einwirken auf das zu sichernde bewegliche Objekt oder die Alarmvorrichtung gewertet werden.

Daher kann die Steuervorrichtung gemäß einer weiteren vorteilhaften Ausführungsform dazu ausgebildet sein, im Alarmierungsmodus, wenn seit dem letzten Ausgeben eines Alarmsignals der vorgegebene Zeitraum noch nicht verstrichen ist und eine erfasste Lageänderung in dem ersten Signifikanzbereich liegt, nicht aber in dem zweiten Signifikanzbereich liegt, die Ausgabevorrichtung zum Ausgeben eines Voralarms anzusteuern. Alternativ zum Aussenden eines weiteren Voralarms kann im Alarmierungsmodus auf eine Lageänderung innerhalb des ersten Signifikanzbereichs auch mit dem Aussenden eines Hauptalarms reagiert werden. Eine weitere alternative Reaktionsmöglichkeit besteht zudem darin, zwar kein Alarmsignal auszugeben, aber den genannten Zeitraum zurückzusetzen, so dass die Steuervorrichtung erst wieder in den Überwachungsmodus wechselt, sobald erstmals wieder für die Dauer des vorgegebenen Zeitraums jede erfasste Lageänderung weder in dem ersten noch in dem zweiten Signifikanzbereich gelegen hat.

Vorzugsweise ist die Steuervorrichtung dazu ausgebildet, im Anschluss an ein Aktivieren der Alarmvorrichtung den Überwachungsmodus zu starten, so dass auf eine Lageänderung im ersten Signifikanzbereich stets zunächst durch einen Voralarm reagiert wird, bevor bei fortgesetzten Lageänderungen möglicherweise auch ein Hauptalarm ausgelöst wird. Das Aktivieren der Alarmvorrichtung kann dabei auf ganz unterschiedliche Weise erfolgen. Beispielsweise kann die Alarmvorrichtung ein Betätigungselement aufweisen, etwa in Form eines Druckknopfes, durch dessen Betätigung die Alarmvorrichtung aktiviert wird. Die Aktivierung der Alarmvorrichtung kann aber auch durch zu der Alarmvorrichtung externe Mittel bewirkt werden, z.B. durch eine Fernbedienung oder dadurch, dass die Alarmvorrichtung mit einem Sicherungs- oder Steuersystem, beispielsweise über einen Kommunikationsbus mit einem E-Bike-Steuersystem, in Verbindung steht, so dass die Alarmvorrichtung darüber aktiviert werden kann.

Da die Befestigung der Alarmvorrichtung an einem jeweiligen beweglichen Objekt lösbar ist, muss sie nicht auf ein bestimmtes Objekt festgelegt sein, sondern kann für verschiedene Objekte geeignet sein. Beispielsweise kann die Alarmvorrichtung in ein Zweiradschloss integriert sein und zur Verwendung mit Zweirädern verschiedener Art ausgebildet sein. Aber auch eine separat, also grundsätzlich unabhängig von einer solchen mechanischen Sicherungsvorrichtung ausgebildete Alarmvorrichtung kann weitgehend universell für verschiedene zu sichernde bewegliche Objekte eingesetzt werden. Dabei ist es jeweils bevorzugt, wenn die Alarmvorrichtung schließbare Befestigungsmittel zum lösbaren Befestigen der Alarmvorrichtung an dem jeweiligen beweglichen Objekt umfasst. Vorzugsweise sind die Befestigungsmittel im geschlossenen Zustand, in dem sie die Alarmvorrichtung an dem jeweiligen beweglichen Objekt halten, auch verriegelbar oder verriegeln automatisch, um ein unbefugtes Lösen der Alarmvorrichtung von dem jeweiligen beweglichen Objekt zu verhindern. Zum Öffnen der Befestigungsmittel kann dann ein Schlüssel oder ein sonstiges Schließgeheimnis erforderlich sein. Grundsätzlich kann das Lösen der Alarmvorrichtung von dem jeweiligen Objekt aber auch dadurch verhindert werden, dass die Alarmvorrichtung unzugänglich und/oder versteckt an oder in dem Objekt angeordnet ist.

In diesem Zusammenhang ist es gemäß einer weiteren Ausführungsform ferner vorteilhaft, wenn die Steuervorrichtung dazu ausgebildet ist, automatisch im Anschluss an ein Schließen der Befestigungsmittel, das auch ein Verriegeln der Befestigungsmittel umfassen kann, vorzugsweise nach Ablauf einer vorgegebenen Wartezeit, den Überwachungsmodus zu starten. Die Alarmvorrichtung braucht dann nicht manuell durch eine eigens für das Aktivieren der Alarmfunktion vorgesehene Betätigung gestartet zu werden. Vielmehr reicht es, die Alarmvorrichtung mittels der Befestigungsmittel an dem zu sichernden beweglichen Objekt zu befestigen, wodurch automatisch der Überwachungsmodus in Gang gesetzt wird.

Das Deaktivieren kann grundsätzlich ähnlich wie das Aktivieren der Alarmvorrichtung erfolgen, z.B. durch Betätigung desselben oder auch eines anderen Betätigungselements, etwa eines Druckknopfes, oder automatisch infolge des Öffnens der Befestigungsmittel. Dabei ist vorzugsweise ein Schutz gegen ein unbefugtes Deaktivieren der Alarmvorrichtung vorgesehen. Wenn die Alarmvorrichtung automatisch beim Öffnen der Befestigungsmittel deaktiviert wird, kann das Deaktivieren durch bereits durch das Schließgeheimnis zum Öffnen der Befestigungsmittel gesichert sein. Es kann aber auch ein gesondertes Schließgeheimnis für das Deaktivieren der Alarmvorrichtung vorgesehen sein. Beispielsweise kann das Deaktivieren das Eingeben eines Zahlencodes oder die Nutzung einer zugeordneten Fernbedienung voraussetzen. Das Schließgeheimnis kann auch lediglich darin bestehen, zu wissen, wo das für das Deaktivieren vorgesehene Betätigungselement versteckt angeordnet ist. Für elektrisch angetriebene Zweiräder ist es ferner bekannt, diese dadurch zu entsperren und/oder in Gang zu setzen, dass eine lösbare Anzeige- und/oder Bedieneinheit ("Tacho") angeschlossen wird. Ein derart erfolgendes Entsperren eines Zweirads kann dann zugleich zum Deaktivieren einer an diesem Zweirad genutzten Alarmvorrichtung verwendet werden.

Zwischen dem Schließen der Befestigungsmittel oder einem sonstigen Aktivieren der Alarmvorrichtung und dem Beginn des Überwachungsmodus wird vorzugsweise eine vorgegebene Wartezeit abgewartet. Dadurch kann vorteilhafterweise vermieden werden, dass Lageänderungen der Alarmvorrichtung, die noch durch das Aktivieren bzw. Schließen oder ein anschließendes Ausrichten (z.B. aufgrund der Schwerkraft) der Alarmvorrichtung verursacht sind, sofort zu einem Alarm führen. Die vorgegebene Wartezeit kann beispielsweise etwa 3 Sekunden betragen. Grundsätzlich kann die vorgegebene Wartezeit auch einstellbar sein, damit ein Nutzer sie nach seinen Wünschen anpassen kann.

Gemäß einer weiteren vorteilhaften Ausführungsform ist die Steuervorrichtung ferner dazu ausgebildet, die Ausgabevorrichtung beim Starten des Überwachungsmodus zum Ausgeben eines Startsignals anzusteuern. Ein solches Startsignal kann einem Nutzer der Alarmvorrichtung die Funktionsfähigkeit der Alarmvorrichtung bestätigen. Der Nutzer kann dadurch beispielsweise zugleich implizit eine Rückmeldung darüber erhalten, dass die Befestigungsmittel der Alarmvorrichtung korrekt geschlossen und gegebenenfalls verriegelt wurden, dass die Alarmvorrichtung hinreichend mit Energie versorgt wird und dass von dem Zeitpunkt des Startsignals an eine Lageänderung der Alarmvorrichtung zu einem Alarm führen kann.

Ferner ist es bevorzugt, wenn die genannte vorgegebene Wartezeit zwischen dem Schließen der Befestigungsmittel und dem Starten des Überwachungsmodus von einem Ladezustand einer Energiequelle der Alarmvorrichtung abhängig ist. Bei der Energiequelle kann es sich insbesondere um eine Batterie oder einen wiederholt aufladbaren Akku handeln. Bei einer solchen Ausführungsform kann somit die Wartezeit als Hinweis über den Ladezustand der Energiequelle genutzt werden. Beispielsweise kann nach einem Schließen der Befestigungsmittel oder einem sonstigen Aktivieren der Alarmfunktion zunächst geprüft werden, ob ein ausreichender Ladezustand vorliegt. Ist dies der Fall, wird der Überwachungsmodus nach z.B. etwa 3 Sekunden gestartet; wenn der Ladezustand dagegen unzureichend ist, was etwa daran festgestellt werden kann, dass eine von der Energiequelle ausgegebene Spannung unterhalb eines Schwellenwerts liegt, wird der Überwachungsmodus erst nach z.B. etwa 6 Sekunden gestartet. Den verzögerten Start des Überwachungsmodus kann der Nutzer der Alarmvorrichtung insbesondere anhand des genannten Startsignals feststellen, so dass er über den niedrigen Ladezustand informiert wird und die Energiequelle austauschen oder aufladen kann.

Grundsätzlich kann ein niedriger Ladezustand aber auch, gegebenenfalls zusätzlich zu einer verlängerten Wartezeit, auf andere Weise einem Nutzer der Alarmvorrichtung signalisiert werden. Beispielsweise kann im Falle eines niedrigen Ladezustands innerhalb der Wartezeit ein Warnsignal ausgegeben werden, z.B. indem die Ausgabevorrichtung dazu angesteuert wird, drei kurze aufeinanderfolgende Warntöne auszugeben.

Des Weiteren kann es zweckmäßig sein, auch zwischen dem Erfassen einer Lageänderung und einem dadurch möglicherweise ausgelösten Aussenden eines Alarmsignals eine Verzögerungszeit vorzusehen, so dass das jeweilige Alarmsignal, z.B. um etwa 0,5 Sekunden, verzögert ausgegeben wird. Die Verzögerungszeit kann beispielsweise dazu genutzt werden, die erfasste Lageänderung auszuwerten. Insbesondere kann es erforderlich sein, zunächst ein Maß für die Lageänderung rechnerisch zu ermitteln. Das kann z.B. ein numerisches Differenzieren umfassen, für das zwei oder mehr erfasste Lageänderungen herangezogen werden, etwa wenn eine Geschwindigkeit bzw. Winkelgeschwindigkeit oder Beschleunigung bzw. Winkelbeschleunigung aus einer Abfolge von Positionen bzw. Ausrichtungen berechnet werden muss. Ferner kann die Verzögerungszeit beispielsweise genutzt werden, um Messungenauigkeiten auszugleichen, indem Mittelwerte über mehrere erfasste Lageänderungen gebildet werden.

Die Erfindung wird nachfolgen lediglich beispielhaft unter Bezugnahme auf die Figuren weiter erläutert.
- Fig.1: zeigt in schematischer Darstellung eine Ausführungsform einer erfindungsgemäßen Alarmvorrichtung.
- Fig. 2: zeigt ein Flussdiagramm, das den Ablauf illustriert, gemäß welchem die Steuervorrichtung die Ausgabevorrichtung zum Ausgeben von Alarmsignalen in Abhängigkeit von mittels der Erfassungsvorrichtung erfassten Lageänderungen der Alarmvorrichtung ansteuert.

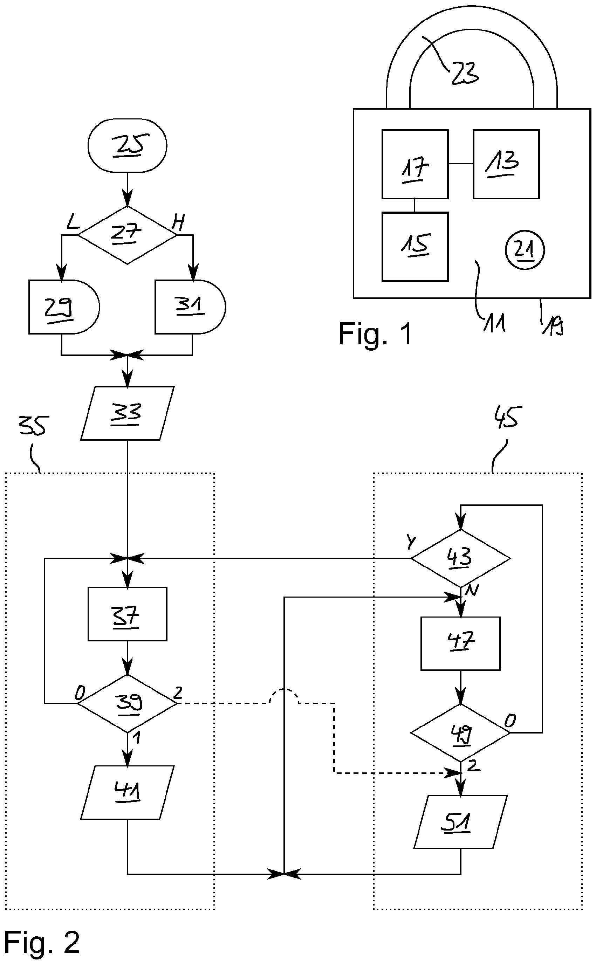

Die in Fig. 1 gezeigte Alarmvorrichtung 11 umfasst eine Erfassungsvorrichtung 13, eine Ausgabevorrichtung 15 sowie eine Steuervorrichtung 17, die gemeinsam in einem Gehäuse 19 der Alarmvorrichtung 11 aufgenommen sind. Die Steuervorrichtung 17 ist einerseits mit der Erfassungsvorrichtung 13 verbunden, um von der Erfassungsvorrichtung 13 erfasste Lageänderungen der Alarmvorrichtung 11 zu empfangen, und andererseits mit der Ausgabevorrichtung 15 verbunden, um die Ausgabevorrichtung 15 in Abhängigkeit von den erfassten Lageänderungen zum Ausgeben von Alarmsignalen und gegebenenfalls weiterer Signale anzusteuern.

Die Erfassungsvorrichtung 13 ist als Beschleunigungssensor ausgebildet, der als jeweilige Lageänderung Beschleunigungen der Alarmvorrichtung 11 in drei paarweise zueinander senkrechten Raumrichtungen erfasst. Die Steuervorrichtung 17 ist dazu ausgebildet, daraus ein Winkelmaß abzuleiten, das einer Änderung der Ausrichtung der Alarmvorrichtung 11 entspricht. Gemäß dem in Fig. 2 gezeigten Flussdiagramm prüft die Steuervorrichtung 17 die erfassten Lageänderungen im Hinblick darauf, ob sie in einem ersten oder einem zweiten Signifikanzbereich liegen, und steuert gegebenenfalls die Ausgabevorrichtung 15 dazu an, einen Voralarm in Form eines Alarmtons mit einer Dauer von etwa 3 Sekunden oder einen Hauptalarm in Form eines Alarmtons mit einer Dauer von etwa 20 Sekunden auszugeben. Dazu ist die Ausgabevorrichtung 15 als akustischer Signalgeber ausgebildet.

Zur Energieversorgung der Alarmvorrichtung 11 ist in dem Gehäuse 19 ferner eine Batterie als Energiequelle 21 vorgesehen, welche die Erfassungsvorrichtung 13, die Ausgabevorrichtung 15 und die Steuervorrichtung 17 mit Strom versorgt. Zudem weist die Alarmvorrichtung 11 Befestigungsmittel 23 auf, die rein schematisch als geschlossener Bügel dargestellt sind und dazu geeignet sind, die Alarmvorrichtung 11 an einem beweglichen Objekt zu befestigen.

Die Steuervorrichtung 17 der Alarmvorrichtung 11 ist dazu ausgebildet, infolge eines Schließens der Befestigungsmittel 23, das auch ein Verriegeln der Befestigungsmittel 23 in ihrem geschlossenen Zustand umfassen kann, die Ausgabevorrichtung 15 gemäß dem in Fig. 2 dargestellten Flussdiagramm zum Ausgeben von Alarmsignalen in Abhängigkeit von erfassten Lageänderungen anzusteuern. Im Folgenden wird der Ablauf der Ansteuerung anhand des Flussdiagramms erläutert.

Der Ablauf beginnt mit dem Startschritt 25, der beispielsweise durch das Schließen der Befestigungsmittel 23 ausgelöst wird, bei einer anderen Ausführungsform der Alarmvorrichtung 11 aber auch durch ein andersartiges Aktivieren der Alarmvorrichtung 11 auszulösen sein kann. Nach dem Starten wird zunächst in dem Entscheidungsschritt 27 der Ladezustand der Energiequelle 21 geprüft, indem eine Ausgangsspannung der Energiequelle 21 mit einem Schwellenwert verglichen wird, der beispielseiweise etwa 2,6 Volt beträgt. Je nachdem, ob der Ladezustand niedrig (L) oder hoch (H) ist, wird der Verzögerungsschritt 29 oder der Verzögerungsschritt 31 ausgeführt, wobei der Verzögerungsschritt 29 einer Wartezeit von etwa 6 Sekunden und der Verzögerungsschritt 31 einer Wartezeit von etwa 3 Sekunden entspricht. Auf beide Verzögerungsschritte 29, 31 folgt derselbe Startsignalausgabeschritt 33, in dem die Steuervorrichtung 17 die Ausgabevorrichtung 15 dazu ansteuert, ein Startsignal auszugeben, das den eigentlichen Beginn der Alarmfunktion der Alarmvorrichtung 11 signalisiert. An der bei niedrigem Ladezustand deutlich längeren Verzögerung zwischen dem Schließen der Befestigungsmittel 23 und dem Startsignal kann ein Nutzer der Alarmvorrichtung 11 erkennen, dass die Energiequelle 21 aufgeladen bzw. ausgetauscht werden muss. Der Entscheidungsschritt 27 mit den zueinander alternativen Verzögerungsschritten 29, 31 und/oder der Startsignalausgabeschritt 33 kann/können aber auch weggelassen werden, wenn keine Überprüfung des Ladezustands erforderlich ist bzw. auf einen niedrigen Ladezustand auf andere Weise hingewiesen oder reagiert werden soll.

Anschließend wird die Steuervorrichtung 17 im Überwachungsmodus 35 betrieben, der als punktiert gezeichnetes Rechteck symbolisiert ist und die von dem Rechteck umrahmten Schritte 37, 39, 41 umfasst. Somit wird durch das Schließen der Befestigungsmittel 23 zwangsläufig zunächst der Überwachungsmodus 35 gestartet, der insofern einem Normalzustand der Alarmvorrichtung 11 entspricht. In dem Überwachungsmodus 35 wird jeweils in dem Erfassungsschritt 37 mittels der Erfassungsvorrichtung 13 eine aktuelle Lageänderung der Alarmvorrichtung 11 erfasst. Dabei kann das Erfassen auch umfassen, festzustellen, dass sich die Lage der Alarmvorrichtung 11 nicht verändert hat, so dass das dieser Lageänderung entsprechende Maß Null beträgt.

Auf den Erfassungsschritt 37 folgt jeweils der Entscheidungsschritt 39, in dem geprüft wird, ob die erfasste Lageänderung in dem ersten Signifikanzbereich liegt. Dazu wird das der Lageänderung entsprechende Maß, das die Steuervorrichtung 17 von der Erfassungsvorrichtung 13 empfängt oder gegebenenfalls aus den von der Erfassungsvorrichtung 13 empfangenen Daten ableitet, mit einem Minimalwert des ersten Signifikanzbereichs und gegebenenfalls auch mit einem Maximalwert des ersten Signifikanzbereichs verglichen. Bei dem für den Vergleich herangezogenen Maß der Lageänderung handelt es sich beispielsweise um ein Winkelmaß, und der Minimalwert des ersten Signifikanzbereichs beträgt beispielsweise etwa 4°. Der erste Signifikanzbereich kann nach oben unbegrenzt sein. Bei der vorliegenden Ausführungsform weist der erste Signifikanzbereich jedoch einen Maximalwert auf, der beispielsweise etwa 12° beträgt.

Liegt die Lageänderung in dem ersten Signifikanzbereich (1), folgt auf den Entscheidungsschritt 39 der Voralarmausgabeschritt 41, in dem die Steuervorrichtung 17 die Ausgabevorrichtung 15 zum Ausgeben des Voralarms ansteuert, wobei der Voralarm beispielsweise ein Alarmton mit einer Alarmdauer von etwa 3 Sekunden ist. Ist das Maß der Lageänderung dagegen kleiner als der Minimalwert des ersten Signifikanzbereichs (0), kehrt die Steuervorrichtung 17 jeweils zum Erfassungsschritt 37 zurück.

Auf den Voralarmausgabeschritt 41 folgt der Erfassungsschritt 47, der nicht dem Überwachungsmodus 35, sondern dem Alarmierungsmodus 45 zugeordnet ist. Daher hat das Erfassen einer Lageänderung, die in dem ersten Signifikanzbereich liegt, im Überwachungsmodus 35 nicht nur zur Folge, dass der Voralarm ausgegeben wird, sondern auch, dass die Steuervorrichtung 17 in den Alarmierungsmodus 45 wechselt, der wiederum als punktiert gezeichnetes Rechteck symbolisiert ist und die von dem Rechteck umrahmten Schritte 43, 47, 49, 51 umfasst.

Der Erfassungsschritt 47 des Alarmierungsmodus 45 entspricht im Wesentlichen dem Erfassungsschritt 37 des Überwachungsmodus 35, da auch im Erfassungsschritt 47 mittels der Erfassungsvorrichtung 13 eine Lageänderung erfasst wird und anschließend in dem Entscheidungsschritt 49 geprüft wird, ob die erfasste Lageänderung in einem bestimmten Signifikanzbereich liegt. Allerdings wird im Alarmierungsmodus 45 ein anderer Signifikanzbereich für den Vergleich herangezogen, nämlich der zweite Signifikanzbereich, der zwar grundsätzlich identisch zu dem ersten Signifikanzbereich sein kann, gemäß der vorliegenden Ausführungsform aber einen größeren Minimalwert aufweist als der erste Signifikanzbereich und nach oben unbegrenzt ist. Beispielsweise beträgt der Minimalwert des zweiten Signifikanzbereichs etwa 12° und ist zu dem Maximalwert des ersten Signifikanzbereichs identisch. Die beiden Signifikanzbereiche können aber auch überlappen.

Wird im Entscheidungsschritt 49 festgestellt, dass die im vorangehenden Erfassungsschritt 47 erfasste Lageänderung in dem zweiten Signifikanzbereich liegt (2), wird der Hauptalarmausgabeschritt 51 ausgeführt, in dem die Steuereinrichtung 17 die Ausgabevorrichtung 15 dazu ansteuert, einen Hauptalarm auszugeben, wobei der Hauptalarm beispielsweise ein Alarmton mit einer Alarmdauer von etwa 20 Sekunden ist. Liegt die erfasste Lageänderung dagegen nicht in dem zweiten Signifikanzbereich (0), wird anhand des weiteren Entscheidungsschritts 43 entschieden, ob der Alarmierungsmodus 45 mit dem Erfassungsschritt 47 fortgesetzt oder in den Überwachungsmodus 35 zu dem Erfassungsschritt 37 zurückgekehrt wird.

Dazu wird in dem Entscheidungsschritt 43 geprüft, ob seit dem letzten Ausgeben eines Alarmsignals eine vorgegebenen Zeitdauer verstrichen ist, wobei diese Zeitdauer beispielsweise etwa 5 Sekunden beträgt. Zudem kann die genannte Zeitdauer von der Art des letzten ausgegebenen Alarmsignals abhängen. Ist die Zeitdauer bereits verstrichen (Y), kehrt die Steuervorrichtung 17 zum Erfassungsschritt 37 und damit in den Überwachungsmodus 35 zurück. Solange dieser Zeitraum jedoch noch nicht verstrichen ist (N), wird der Alarmierungsmodus 45 fortgesetzt, indem im Erfassungsschritt 47 wiederum die nächste Lageänderung erfasst und im Entscheidungsschritt 49 hinsichtlich ihrer Signifikanz geprüft wird.

Der Entscheidungsschritt 43 kann grundsätzlich auch an anderer als der in Fig. 2 dargestellten Stelle innerhalb des Alarmierungsmodus 45 vorgesehen sein. Die Prüfung, ob seit dem letzten Ausgaben eines Alarmsignals der vorgegebene Zeitraum verstrichen ist, kann nämlich beispielsweise auch zwischen dem Erfassungsschritt 47 und dem Entscheidungsschritt 49 erfolgen, ohne dass sich dadurch die Funktion der Alarmvorrichtung 11 wesentlich ändern würde. Ferner kann anders als in Fig. 2 dargestellt auch nach dem Voralarmausgabeschritt 41 und/oder dem Hauptalarmausgabeschritt 51 vor dem Erfassungsschritt 47 zunächst der Entscheidungsschritt 43 ausgeführt werden.

Weitere Varianten der in Fig. 2 dargestellten Ausführungsform können sich aus der Frage ergeben, wie im Überwachungsmodus 35 im Entscheidungsschritt 39 auf eine erfasste Lageänderung reagiert wird, die nicht in dem ersten Signifikanzbereich liegt, aber in dem zweiten Signifikanzbereich liegt, und wie im Alarmierungsmodus 45 im Entscheidungsschritt 49 auf eine erfasste Lageänderung reagiert wird, die in dem ersten Signifikanzbereich liegt, nicht aber in dem zweiten Signifikanzbereich liegt. Der erstgenannte Fall kann insbesondere dann eintreten, wenn der Minimalwert des ersten Signifikanzbereichs kleiner als der Minimalwert des zweiten Signifikanzbereichs ist, der zweitgenannte Fall insbesondere dann, wenn der Maximalwert des ersten Signifikanzbereichs kleiner als ein Maximalwert des zweiten Signifikanzbereichs ist, sofern der zweite Signifikanzbereich nach oben überhaupt begrenzt ist.

In Fig. 2 wird eine dieser Varianten durch den unterbrochen gezeichneten Pfeil zwischen dem Entscheidungsschritt 39 und dem Hauptalarmausgabeschritt 51 angedeutet. Gemäß einer solchen Variante wird, wenn im Überwachungsmodus 35 im Entscheidungsschritt 39 festgestellt wird, dass eine erfasste Lageänderung nicht in dem ersten Signifikanzbereich liegt, aber in dem zweiten Signifikanzbereich liegt (2), direkt der Hauptalarmausgabeschritt 51 des Alarmierungsmodus 45 ausgeführt.

Als weitere Variante kann alternativ oder zusätzlich vorgesehen sein, dass von dem Entscheidungsschritt 49 im Alarmierungsmodus 45 ein Pfeil ausgeht, dem gefolgt wird, wenn festgestellt wird, dass eine erfasste Lageänderung in dem ersten Signifikanzbereich liegt, nicht aber in dem zweiten Signifikanzbereich liegt. Dieser nicht dargestellte weitere Pfeil kann dann entweder wie im Falle einer dem zweiten Signifikanzbereich zuzuordnenden Lageänderung zum Hauptalarmausgabeschritt 51 führen; oder er kann zum Voralarmausgabeschritt 41 führen; oder er kann ähnlich wie bei der in Fig. 2 gezeigten Ausführungsform zum Anfang des Alarmierungsmodus 45, insbesondere zum Entscheidungsschritt 43, führen, wobei dann aber im Unterschied zu einer unterschwelligen Lageänderung, die weder im ersten noch im zweiten Signifikanzbereich liegt, der im Entscheidungsschritt 43 berücksichtigte vorgegebene Zeitraum vorzugsweise zurückgesetzt wird, also nicht länger auf das tatsächlich letzte Ausgeben eines Alarmsignals bezogen ist, sondern neu anfängt.

Durch die dargestellte Ausführungsform und ihre Varianten kann jeweils das Auftreten lauter und störender Fehlalarme reduziert werden. Denn entweder führt keine erfasste Lageänderung der Alarmvorrichtung 11 direkt zum Ausgeben eines Hauptalarms, sondern stets zunächst zum Ausgeben eines Voralarms; oder (gemäß der in Fig. 2 mit dem unterbrochen gezeichneten Pfeil dargestellten Variante) ein Hauptalarm wird nur dann direkt ausgelöst, wenn die erfasste Lageänderung besonders groß ist. In beiden Fällen ist die Reaktion auf erfasste Lageänderungen in vorteilhafter Weise differenzierter als, wenn lediglich ein einzelner Schwellenwert vorgesehen würde, oberhalb dessen jede Lageänderung zu demselben lauten und lang andauernden Hauptalarm führen würde. Insbesondere können zufällige und geringfügige und/oder kurzzeitige Einwirkungen auf die Alarmvorrichtung 11 lediglich zum Ausgeben eines im Vergleich zum Hauptalarm weniger störenden Voralarms führen, ohne dass zwangsläufig anschließend noch ein Hauptalarm ausgelöst wird. Somit werden zwar Fehlalarme nicht vollständig ausgeschlossen, es wird aber die Wahrscheinlichkeit reduziert, dass sie zu einem umfassenden Hauptalarm führen. Zugleich bleibt durch den Voralarm gewährleistet, dass auf möglicherweise unbefugte Einwirkungen auf das gesicherte bewegliche Objekt im Wesentlichen unverzüglich, wenn auch in zunächst reduzierter Weise, zuverlässig reagiert wird.

### Bezuqszeichen

- 11: Alarmvorrichtung
- 13: Erfassungsvorrichtung
- 15: Ausgabevorrichtung
- 17: Steuervorrichtung
- 19: Gehäuse
- 21: Energiequelle
- 23: Befestigungsmittel
- 25: Startschritt
- 27: Entscheidungsschritt
- 29: Verzögerungsschritt
- 31: Verzögerungsschritt
- 33: Startsignalausgabeschritt
- 35: Überwachungsmodus
- 37: Erfassungsschritt
- 39: Entscheidungsschritt
- 41: Voralarmausgabeschritt
- 43: Entscheidungsschritt
- 45: Alarmierungsmodus
- 47: Erfassungsschritt
- 49: Entscheidungsschritt
- 51: Hauptalarmausgabeschritt

## Patentansprüche

1. Mobile Alarmvorrichtung (11) zur lösbaren Befestigung an einem beweglichen Objekt, insbesondere an einem Zweirad oder einem Werkzeug, mit einer Erfassungsvorrichtung (13) zum Erfassen von Lageänderungen der Alarmvorrichtung (11), einer Ausgabevorrichtung (15) zum Ausgeben von Alarmsignalen sowie einer Steuervorrichtung (17) zum Ansteuern der Ausgabevorrichtung (15) in Abhängigkeit von erfassten Lageänderungen, wobei die Steuervorrichtung (17) in einem Überwachungsmodus (35) und in einem Alarmierungsmodus (45) betreibbar und dazu ausgebildet ist,
im Überwachungsmodus (35):
- wenn eine erfasste Lageänderung in einem ersten Signifikanzbereich liegt, die Ausgabevorrichtung (15) zum Ausgeben eines Voralarms anzusteuern sowie in den Alarmierungsmodus (45) zu wechseln;
im Alarmierungsmodus (45):
- wenn seit dem letzten Ausgeben eines Alarmsignals ein vorgegebener Zeitraum verstrichen ist, in den Überwachungsmodus (35) zu wechseln
- und andernfalls, wenn eine erfasste Lageänderung in einem zweiten Signifikanzbereich liegt, die Ausgabevorrichtung (15) zum Ausgeben eines von dem Voralarm verschiedenen Hauptalarms anzusteuern.

2. Mobile Alarmvorrichtung nach Anspruch 1,
wobei der Hauptalarm eine andere, insbesondere größere, Dauer, Lautstärke, Tonhöhe und/oder Modulationsfrequenz als der Voralarm aufweist.

3. Mobile Alarmvorrichtung nach Anspruch 1 oder 2,
wobei die erfasste Lageänderung dann in einem jeweiligen Signifikanzbereich liegt, wenn ein der Lageänderung entsprechendes Maß, insbesondere Winkelmaß, größer oder nicht kleiner als ein Minimalwert des jeweiligen Signifikanzbereichs ist und gegebenenfalls kleiner oder nicht größer als ein Maximalwert des jeweiligen Signifikanzbereichs ist.

4. Mobile Alarmvorrichtung nach Anspruch 3,
wobei der Minimalwert des ersten Signifikanzbereichs kleiner als der Minimalwert des zweiten Signifikanzbereichs ist.

5. Mobile Alarmvorrichtung nach Anspruch 3 oder 4,
wobei der erste und der zweite Signifikanzbereich einander überlappen.

6. Mobile Alarmvorrichtung nach Anspruch 4,
wobei der Maximalwert des ersten Signifikanzbereichs dem Minimalwert des zweiten Signifikanzbereichs entspricht.

7. Mobile Alarmvorrichtung nach zumindest einem der Ansprüche 3 bis 6,
wobei der Minimalwert des ersten Signifikanzbereichs mindestens etwa 2° und höchstens etwa 10° beträgt und/oder der Minimalwert des zweiten Signifikanzbereichs mindestens etwa 12° und höchstens etwa 20° beträgt.

8. Mobile Alarmvorrichtung nach zumindest einem der vorstehenden Ansprüche,
wobei der genannte vorgegebene Zeitraum, nach dessen Verstreichen die Steuervorrichtung (17) aus dem Alarmierungsmodus (45) in den Überwachungsmodus (35) wechselt, etwa 3 Sekunden oder etwa 5 Sekunden beträgt.

9. Mobile Alarmvorrichtung nach zumindest einem der vorstehenden Ansprüche,
wobei der genannte vorgegebene Zeitraum, nach dessen Verstreichen die Steuervorrichtung (17) aus dem Alarmierungsmodus (45) in den Überwachungsmodus (35) wechselt, davon abhängig ist, was für ein Alarmsignal zuletzt ausgegeben wurde.

10. Mobile Alarmvorrichtung nach zumindest einem der vorstehenden Ansprüche,
wobei die Steuervorrichtung (17) ferner dazu ausgebildet ist,
im Überwachungsmodus (35):
- wenn eine erfasste Lageänderung nicht in dem ersten Signifikanzbereich liegt, aber in dem zweiten Signifikanzbereich liegt, die Ausgabevorrichtung (15) zum Ausgeben des Hauptalarms anzusteuern sowie in den Alarmierungsmodus (45) zu wechseln.

11. Mobile Alarmvorrichtung nach zumindest einem der vorstehenden Ansprüche,
wobei die Steuervorrichtung (17) ferner dazu ausgebildet ist,
im Alarmierungsmodus (45):
- wenn seit dem letzten Ausgeben eines Alarmsignals der vorgegebene Zeitraum noch nicht verstrichen ist und eine erfasste Lageänderung in dem ersten Signifikanzbereich liegt, nicht aber in dem zweiten Signifikanzbereich liegt, die Ausgabevorrichtung (15) zum Ausgeben eines Voralarms anzusteuern.

12. Mobile Alarmvorrichtung nach zumindest einem der vorstehenden Ansprüche,
wobei die Steuervorrichtung (17) dazu ausgebildet ist, im Anschluss an ein Aktivieren der Alarmvorrichtung (11), vorzugsweise nach Ablauf einer vorgegebenen Wartezeit, den Überwachungsmodus (35) zu starten.

13. Mobile Alarmvorrichtung nach zumindest einem der vorstehenden Ansprüche,
wobei die Alarmvorrichtung (11) ferner schließbare Befestigungsmittel (23) zum Befestigen der Alarmvorrichtung (11) an dem beweglichen Objekt umfasst und
wobei die Steuervorrichtung (17) dazu ausgebildet ist, automatisch im Anschluss an ein Schließen der Befestigungsmittel (23), vorzugsweise nach Ablauf einer vorgegebenen Wartezeit, den Überwachungsmodus (35) zu starten.

14. Mobile Alarmvorrichtung nach Anspruch 12 oder 13,
wobei die genannte vorgegebene Wartezeit von einem Ladezustand einer Energiequelle (21) der Alarmvorrichtung (11) abhängig ist.

15. Mobile Alarmvorrichtung nach zumindest einem der vorstehenden Ansprüche,
wobei die Steuervorrichtung (17) ferner dazu ausgebildet ist,
die Ausgabevorrichtung (15) beim Starten des Überwachungsmodus (35) zum Ausgeben eines Startsignals anzusteuern.

## Claims

1. A mobile alarm apparatus (11) for releasable fastening to a movable object, in particular to a two-wheeler or to a tool, comprising a detection apparatus (13) for detecting positional changes of the alarm apparatus (11); an output apparatus (15) for the output of alarm signals; and a control apparatus (17) for controlling the output apparatus (15) in dependence on detected positional changes,
wherein the control apparatus (17) is operable in a monitoring mode (35) and in an alarm mode (45) and is configured
in the monitoring mode (35):
- to control the output apparatus (15) to output a pre-alarm and to change into the alarm mode (45) when a detected positional change is within a first range of significance; and
in the alarm mode (45):
- to change into the monitoring mode (35) when a predefined time period has elapsed since the last output of an alarm signal;
- and otherwise to control the output apparatus (15) to output a main alarm different from the pre-alarm when a detected positional change is within a second range of significance.

2. A mobile alarm apparatus in accordance with claim 1,
wherein the main alarm has a different, in particular a larger duration, volume, pitch and/or modulation frequency than the pre-alarm.

3. A mobile alarm apparatus in accordance with claim 1 or claim 2,
wherein the detected positional change is within a respective range of significance when a measure, in particular an angular measure, corresponding to the positional change is larger than or no smaller than a minimal value of the respective range of significance and is optionally smaller than or no larger than a maximum value of the respective range of significance.

4. A mobile alarm apparatus in accordance with claim 3,
wherein the minimal value of the first range of significance is smaller than the minimal value of the second range of significance.

5. A mobile alarm apparatus in accordance with claim 3 or claim 4,
wherein the first and second ranges of significance mutually overlap.

6. A mobile alarm apparatus in accordance with claim 4,
wherein the maximum value of the first range of significance corresponds to the minimal value of the second range of significance.

7. A mobile alarm apparatus in accordance with at least one of the claims 3 to 6,
wherein the minimal value of the first range of significance amounts to at least approximately 2° and to at most approximately 10°; and/or wherein the minimal value of the second range of significance amounts to at least approximately 12° and to at most approximately 20°.

8. A mobile alarm apparatus in accordance with at least one of the preceding claims,
wherein said predefined time period after whose elapse the control apparatus (17) changes from the alarm mode (45) into the monitoring mode (35) amounts to approximately 3 seconds or to approximately 5 seconds.

9. A mobile alarm apparatus in accordance with at least one of the preceding claims,
wherein said predefined time period after whose elapse the control apparatus (17) changes from the alarm mode (45) into the monitoring mode (35) is dependent on what kind of alarm signal was last output.

10. A mobile alarm apparatus in accordance with at least one of the preceding claims,
wherein the control apparatus (17) is furthermore configured in the monitoring mode (35):
- to control the output apparatus (15) to output the main alarm and to change into the alarm mode (45) when a detected positional change is not within the first range of significance, but is within the second range of significance.

11. A mobile alarm apparatus in accordance with at least one of the preceding claims,
wherein the control apparatus (17) is furthermore configured in the alarm mode (45):
- to control the output apparatus (15) to output a pre-alarm when the predefined time period since the last output of an alarm signal has not yet elapsed and a detected positional change is within the first range of significance, but not within the second range of significance.

12. A mobile alarm apparatus in accordance with at least one of the preceding claims,
wherein the control apparatus (17) is configured to start the monitoring mode (35) subsequent to an activation of the alarm apparatus (11), preferably after the elapse of a predefined waiting time.

13. A mobile alarm apparatus in accordance with at least one of the preceding claims,
wherein the alarm apparatus (11) furthermore comprises closable fastening means (23) for fastening the alarm apparatus (11) to the movable object; and
wherein the control apparatus (17) is configured to start the monitoring mode (35) automatically subsequent to a closing of the fastening means (23), preferably after the elapse of a predefined waiting time.

14. A mobile alarm apparatus in accordance with claim 12 or claim 13,
wherein said predefined waiting time is dependent on a charge state of an energy source (21) of the alarm apparatus (11).

15. A mobile alarm apparatus in accordance with at least one of the preceding claims,
wherein the control apparatus (17) is furthermore configured to control the output apparatus (15) to output a start signal on the start of the monitoring mode (35).

## Revendications

1. Dispositif d'alarme mobile (11) destiné à être fixé de manière amovible sur un objet mobile, en particulier sur un deux-roues ou sur un outil, comprenant un dispositif de détection (13) pour détecter les changements de position du dispositif d'alarme (11), un dispositif de sortie (15) pour émettre des signaux d'alarme et un dispositif de pilotage (17) pour piloter le dispositif de sortie (15) en fonction des changements de position détectés, le dispositif de pilotage (17) pouvant fonctionner en mode de surveillance (35) et en mode d'alarme (45) et étant conçu,
en mode de surveillance (35) :
- si un changement de position détecté se situe dans une première plage de signification, pour piloter le dispositif de sortie (15) en vue d'émettre une pré-alarme et pour passer en mode d'alarme (45) ;
en mode d'alarme (45) :
- si une période de temps prédéterminée s'est écoulée depuis la dernière émission d'un signal d'alarme, pour passer en mode de surveillance (35)
- et sinon, si un changement de position détecté se situe dans une deuxième plage de signification, pour piloter le dispositif de sortie (15) en vue d'émettre une alarme principale différente de la pré-alarme.

2. Dispositif d'alarme mobile selon la revendication 1,
dans lequel
l'alarme principale présente une autre durée, intensité de son, hauteur de son et/ou fréquence de modulation, en particulier plus importante(s), que celle(s) de la pré-alarme.

3. Dispositif d'alarme mobile selon la revendication 1 ou 2,
dans lequel
le changement de position détecté se situe dans une plage de signification respective si une valeur correspondant au changement de position, en particulier une valeur angulaire, est supérieure ou non inférieure à une valeur minimale de la plage de signification respective et, le cas échéant, est inférieure ou non supérieure à une valeur maximale de la plage de signification respective.

4. Dispositif d'alarme mobile selon la revendication 3,
dans lequel
la valeur minimale de la première plage de signification est inférieure à la valeur minimale de la deuxième plage de signification.

5. Dispositif d'alarme mobile selon la revendication 3 ou 4,
dans lequel
la première et la deuxième plage de signification se chevauchent mutuellement.

6. Dispositif d'alarme mobile selon la revendication 4,
dans lequel
la valeur maximale de la première plage de signification est égale à la valeur minimale de la deuxième plage de signification.

7. Dispositif d'alarme mobile selon l'une au moins des revendications 3 à 6,
dans lequel
la valeur minimale de la première plage de signification est au minimum d'environ 2° et au maximum d'environ 10°, et/ou la valeur minimale de la deuxième plage de signification est au minimum d'environ 12° et au maximum d'environ 20°.

8. Dispositif d'alarme mobile selon l'une au moins des revendications précédentes,
dans lequel
ladite période de temps prédéterminée après écoulement de laquelle le dispositif de pilotage (17) passe du mode d'alarme (45) au mode de surveillance (35) est d'environ 3 secondes ou d'environ 5 secondes.

9. Dispositif d'alarme mobile selon l'une au moins des revendications précédentes,
dans lequel
ladite période de temps prédéterminé après écoulement de laquelle le dispositif de pilotage (17) passe du mode d'alarme (45) au mode de surveillance (35) dépend du type de signal d'alarme émis en dernier.

10. Dispositif d'alarme mobile selon l'une au moins des revendications précédentes,
dans lequel
le dispositif de pilotage (17) est en outre réalisé,
en mode de surveillance (35) :
- si un changement de position détecté ne se situe pas dans la première plage de signification, mais se situe dans la deuxième plage de signification, pour piloter le dispositif de sortie (15) en vue d'émettre l'alarme principale et pour passer en mode d'alarme (45).

11. Dispositif d'alarme mobile selon l'une au moins des revendications précédentes,
dans lequel
le dispositif de pilotage (17) est en outre réalisé,
en mode d'alarme (45) :
- si la période de temps prédéterminée ne s'est pas encore écoulée depuis la dernière émission d'un signal d'alarme et un changement de position détecté se situe dans la première plage de signification, mais ne se situe pas dans la deuxième plage de signification, pour piloter le dispositif de sortie (15) en vue d'émettre une pré-alarme.

12. Dispositif d'alarme mobile selon l'une au moins des revendications précédentes,
dans lequel
le dispositif de pilotage (17) est réalisé pour lancer le mode de surveillance (35) suite à une activation du dispositif d'alarme (11), de préférence après écoulement d'un temps d'attente prédéterminé.

13. Dispositif d'alarme mobile selon l'une au moins des revendications précédentes,
dans lequel
le dispositif d'alarme (11) comprend en outre des moyens de fixation refermables (23) pour fixer le dispositif d'alarme (11) sur l'objet mobile, et le dispositif de pilotage (17) est réalisé pour lancer automatiquement le mode de surveillance (35) suite à une fermeture des moyens de fixation (23), de préférence après écoulement d'un temps d'attente prédéterminé.

14. Dispositif d'alarme mobile selon la revendication 12 ou 13,
dans lequel
ledit temps d'attente prédéterminé dépend d'un état de charge d'une source d'énergie (21) du dispositif d'alarme (11).

15. Dispositif d'alarme mobile selon l'une au moins des revendications précédentes,
dans lequel
le dispositif de pilotage (17) est en outre réalisé pour piloter le dispositif de sortie (15) en vue d'émettre un signal de lancement lors du lancement du mode de surveillance (35).
